# EUROPEAN PATENT SPECIFICATION

(11) **EP 4 172 077 B1**
(45) Date of publication and mention of the grant of the patent: **31.07.2024**
(21) Application number: 21731851.8
(22) Date of filing: 11.06.2021
(51) Int. Cl.: B65G 29/02, B65G 47/32, B65G 47/86, B65G 47/90, B25J 15/00

(54) **HANDLING SYSTEM AND METHOD FOR THE EXTRACTION OF GLASS CONTAINERS FOR PHARMACEUTICAL AND/OR COSMETIC USE FROM A TRAY AND TRANSFER TO A CONTINUOUS CONVEYOR**
HANDHABUNGSSYSTEM UND VERFAHREN ZUR EXTRAKTION VON GLASBEHÄLTERN FÜR PHARMAZEUTISCHE UND/ODER KOSMETISCHE VERWENDUNG AUS EINER SCHALE UND ZUR ÜBERGABE AUF EINEN ENDLOSFÖRDERER
SYSTÈME ET PROCÉDÉ DE MANIPULATION POUR L'EXTRACTION DE RÉCIPIENTS EN VERRE À USAGE PHARMACEUTIQUE ET/OU COSMÉTIQUE D'UN PLATEAU ET LE TRANSFERT SUR UN TRANSPORTEUR CONTINU

(30) Priority: 25.06.2020 IT 202000015313
(43) Date of publication of application: 03.05.2023
(73) Proprietor: Euromatic S.r.l., 24047 Treviglio (BG) (IT)
(72) Inventor: GUSMINI, Giorgio, 24040 Calvenzano (BG) (IT)
(74) Representative: Dragotti & Associati S.R.L.
(86) International application number: PCT/IB2021/055148
(87) International publication number: WO 2021/260476

(56) References cited:
- EP-A1- 2 441 711
- EP-A1- 3 187 424
- WO-A1-2007/121930
- DE-A1- 102014 203 421
- DE-C1- 4 307 906

## Description

The present invention relates to a handling system and method for the extraction of glass containers for pharmaceutical and/or cosmetic use from a tray and transfer to a continuous conveyor.

In the field of the handling of glass containers for pharmaceutical and/or cosmetic use, such as syringes, cartridges and the like, specific arrangements of parts and/or machines are used which determine the required handling.

It should also be taken into account, for example, that the term syringes actually indicates syringe bodies, comprising the final flanged part and the cylindrical body containing the treatment liquid with its tip on which the needle is generally inserted.

The transporting and storage of the glass containers defined above such as glass syringes is effected with the aid of trays made of thermoplastic material (plastic tray), equipped with negative impressions of the body (diameter) of the syringes according to the their diameter.

These trays are widely used for both the shipment of syringes from the glass-tube transformer to the customer (pharmaceutical industry which subsequently provides for the washing, sterilization, assembly and filling) and also within the manufacturer's production site for transferring the syringes from one processing step to the next.

The trays are therefore used in machines where the transfer of syringes or similar objects may be required from a machine area that transports them according to a certain frequency or a certain step arrangement, for example on trays, towards a machine area that transports them in a spaced and continuous manner consecutively, such as a conveyor. Solutions are known for example in which the syringes are extracted from a tray in which they are contained and arranged in different ways. It has been noted that the limitation of these solutions is that they damage or rub the syringe on the container itself or the extraction method ruins the thermoplastic tray.

Some solutions, in fact, intervene on the syringes through a plastic "hook" that "detaches" them from the container or tray and the syringes, rubbing against the plastic, are consequently damaged. In particular, the syringes are stained by the plastic itself.

In other solutions, a robot or a gripping device is used which withdraws the syringes from the container or tray. In this case, in order to prevent the syringes from rubbing against the plastic of the container (tray), the slots or grips of the container are "opened" with special "scissors". By doing so, the syringe containers are damaged. Furthermore, the device for opening/closing the slots requires numerous maintenance interventions, which are extremely expensive as they are high precision.

As part of the various and different handling processes, the syringes are loaded into the trays and subsequently extracted to be conveyed to an automatic unit positioned downstream. There are machines or groups, for example, in which the syringes are extracted from the above-mentioned trays and conveyed to a subsequent washing machine, etc.

A technical problem that creates difficulties in these machines or groups arises when the syringes, which are arranged in the trays at a predetermined distance based on the negative impressions of the syringes, must be transferred to a conveyor or similar equipment in which the distance between the syringes is different. Another problem that arises is that of having the feeding of the trays according to a first spatial direction and providing for the subsequent movement of the syringes withdrawn according to a different spatial direction. What is described above is not easy to overcome with the machines currently available.

EP 2441711A discloses a system for extracting glass containers according to the preamble of claim 6. Said document discloses further a method for extracting glass containers contained in a tray and transferring them to a linear conveyor, wherein a series of trays, provided with a series of recesses or impressions, house a series of glass containers and are caused to move and advance at a predetermined distance from each other on a feeding plane to be brought beneath an extraction device of the glass containers from the trays. The extraction device comprises a series of extraction pincers of the single glass container arranged between each other at a first reciprocal distance equal to that between said recesses or impressions. The method provides an extraction step of said glass containers from said trays by means of said pincers, a step for transferring all of said glass containers withdrawn by said extraction device from said trays to a position above said linear conveyor and a step for releasing all of said glass containers together on said linear conveyor.

The general objective of the present invention is to provide a handling system and a method for extracting glass containers for pharmaceutical and/or cosmetic use from a tray and transferring them to a continuous conveyor capable of solving the above-mentioned drawbacks of the prior art in an extremely simple, economical and particularly functional way.

A further objective of the present invention is to provide a system and a method for handling glass containers or syringes which avoids any possible indentation or scratching in general of the syringe being handled.

Another objective of the present invention is to provide a handling system and a method for extracting glass containers for pharmaceutical and/or cosmetic use from a tray and transferring them to a continuous conveyor that guarantees continuity in the transfer to the receiving conveyor, without any lack of product.

Last but not least, the objective of the present invention is to provide a handling system and a method that is easily adjustable and adaptable to the specific processing and transfer requirements of syringes and/or similar containers.

The above-mentioned objectives are achieved by a method for extracting glass containers according to claim 1 and by a system for extracting glass containers according to claim 6.

The structural and functional characteristics of the present invention and its advantages with respect to the known art will become even more evident from the following description, referring to the attached schematic drawings, which show an embodiment example of the invention. In the drawings:
- figure 1 shows an overall perspective view of a part of a syringe treatment machine in which a handling system is provided for extracting syringes from a tray and transferring them to a continuous conveyor according to the present invention, positioned and operating in a first operating position of the system with the robot head for withdrawal;
- figure 2 is a perspective view, similar to that of figure 1, in a second operating position with the robot head releasing the syringes onto a linear conveyor;
- figures 3 and 4 show a partial perspective view and a sectional view of the system which allows the rotation according to a circumference of wheel or star sectors of a device for extracting syringes from underlying trays;
- figures 5 and 6 show perspective views of one of the wheel or star sectors equipped with extraction pincers;
- figures 7 and 8 show a section taken along the line VII-VII of figure 6 and an enlarged detail according to the circle B indicated in figure 6 of parts of the wheel or star sector;
- figures 9 and 10 show perspective views of a robot head, as illustrated, with gripping elements as positioned in figures 1 and 2 respectively;
- figures 11 and 11b show split sectional perspective views and through an enlarged detail according to the circle C of the robot head as shown in figures 1 and 9 in the withdrawal position;
- figures 12 and 12b show split sectional perspective views and through an enlarged detail according to the circle D of the robot head as shown in figures 2 and 10 in the release position;
- figures 13 and 13b show perspective views similar to those of figures 11 and 11b according to different sections and details according to the circle E in the withdrawal position;
- figures 14 and 14b show perspective views similar to those of figures 12 and 12b according to different sections and details according to the circle G in the release position;
- figures 15, 16 and 17 show, in three different positions, the movement sequence of the three wheel sectors or star segment during the extraction of the syringes;
- the schematic figures from 18 to 23 show a series of positions suitable for understanding how a single sector moves in its circular path around the axis X.

With reference to the exemplary and non-limiting figures, these show an embodiment of a handling system for the extraction of syringes or similar containers from a tray and the transfer of syringes or similar containers as previously defined to a continuous conveyor according to the present invention and a relative method.

Indications such as "vertical" and "horizontal", "upper" and "lower" (in the absence of other indications) should be read with reference to the assembly (or operating) conditions and referring to the normal terminology used in current language, where "vertical "indicates a direction substantially parallel to that of the force of gravity vector "g" and a horizontal direction perpendicular to it.

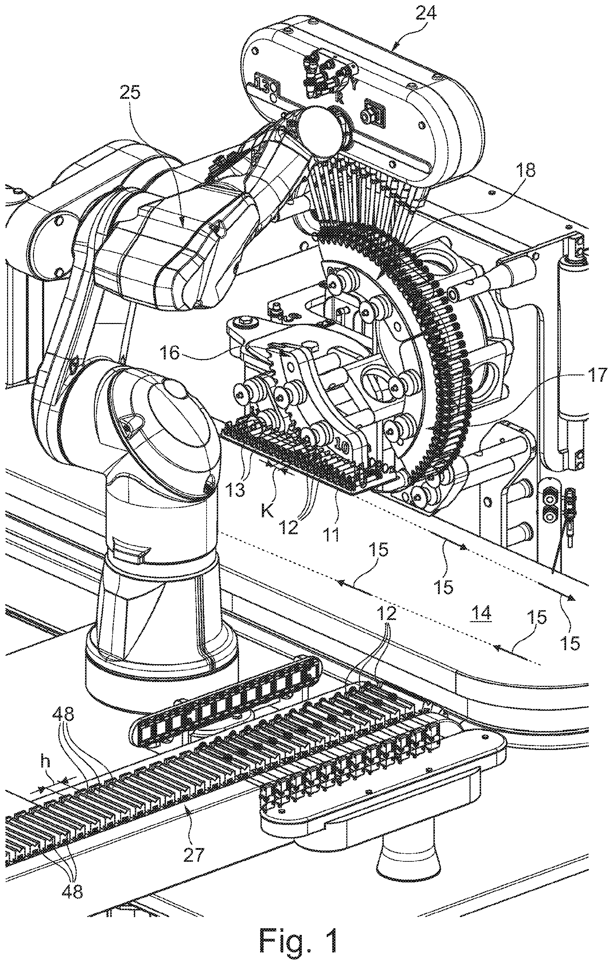

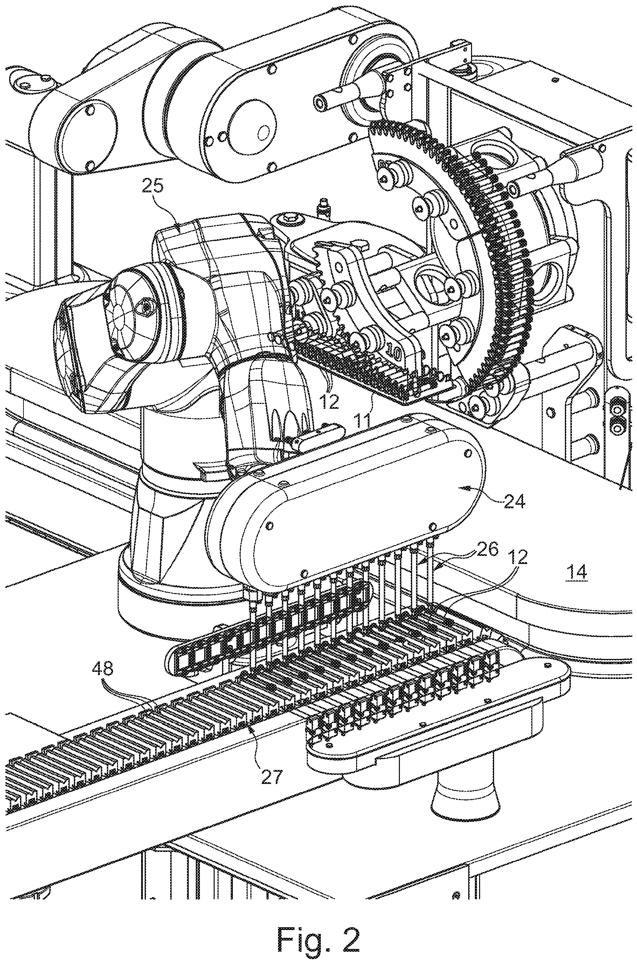

Referring first to figures 1 and 2, a syringe handling system provides a feeding of trays 11, for example of the type generally used in these machines, each containing a row of syringes 12 or the like, housed in suitable recesses or impressions 13 of the same trays 11. The trays 11 are caused to move and advance at a predetermined distance from each other on a horizontal feeding plane 14 according to a loop path indicated by the track 15, in steps and/or continuously depending on the specific operating phase.

The trays 11 are thus brought and passed under an extraction device of the syringes 12 from the trays 11. The extraction device comprises three wheel sectors 16, 17 and 18, or star segments, caused to rotate around a horizontal common axis X along a circular path through respective motors 19, 20 and 21. The wheel sectors 16, 17 and 18 on an outer peripheral surface formed as an arc of circumference, inserted in a suitable arched groove 22, carry a series of extraction pincers 23 of the single syringe 12 arranged at a first reciprocal distance k corresponding to the pitch between consecutive recesses or impressions 13 of the trays 11.

As clearly shown in the figures, the single wheel sector 16, 17 and 18, rotating around the axis X, moves on a vertical plane, perpendicular to the feeding plane of the trays, and follows a trajectory, indicated by the arrow F, which is in a tangent direction to the feeding plane 14, and to the trays 11, according to a circular pattern. The three wheel sectors 16, 17 and 18 therefore occupy less than three quarters of the circumference they are moving along and can thus follow each other in the above-mentioned trajectory as will be seen hereunder.

Their movement is such as to allow the extraction of the single syringe 12 from the single tray 11 moving on the lower horizontal feeding plane 14 (figure 1). Furthermore, it is such as to guarantee their movement towards an upper position, in particular a gripping position of a head 24 of a manipulator or withdrawal robot 25. All of this takes place thanks to the synchronism between the wheel sectors 16, 17 and 18 for the extraction of the syringes 12 and the movement of the tray 11 which is part of the flow of the trays on the horizontal plane.

The head 24 of the withdrawal robot 25 provides a series of gripping elements 26 that are movable and variable in position with respect to each other according to the choice of the pitch or distance between consecutive gripping syringes 12.

The robot 25, in the movement of its head 24 in space towards a continuous linear conveyor 27 below (figure 2), is capable of varying the pitch or distance between consecutive gripped syringes 12 for preparing them to be arranged in housings 48 provided in said linear conveyor 27.

It should be noted that these housings 48 of the linear conveyor 27, for example a belt, are arranged at a second distance h different from the first distance k so that the syringes are released at a reciprocal distance different from the distance they had when they were carried by the wheel sectors or star segments 16, 17 and 18 i.e. from the trays 11. And this second distance h turns out to be specifically the correct distance for deposition on the linear conveyor 27.

In this way, the head 24 of the robot 25 effects a linear deposit on the conveyor 27 with a different deposition pitch as required and according to the type of conveyor 27 in use.

An important detail of the present invention, which solves the problems of the known art, is that of obtaining a variation in pitch between the individual syringes through this movement from the trays to the linear conveyor. The system or the robot head in fact allows the syringes to be taken at one pitch and deposited on a subsequent conveyor or machine station at a different pitch.

Specifically, the syringes 12 are extracted from the single tray 11 arranged at a first distance k between one syringe and another (figure 1). This extraction takes place through the wheel or star sectors 16, 17 and 18 with a series of extraction pincers 23 which extract the single syringe 12 with an identical pitch. The wheel or star sectors 16, 17 and 18 then cause the syringes 12 to be withdrawn from the head 24 of the robot 25.

Through this transfer, therefore, the required spacing between the individual syringes 12 takes place and also a variation in their positioning on the planes or in the desired parts of the machine, useful for their correct treatment. By means of the present invention, in fact, the syringes fed on the trays according to a first spatial direction are moved so as to acquire a different spatial direction.

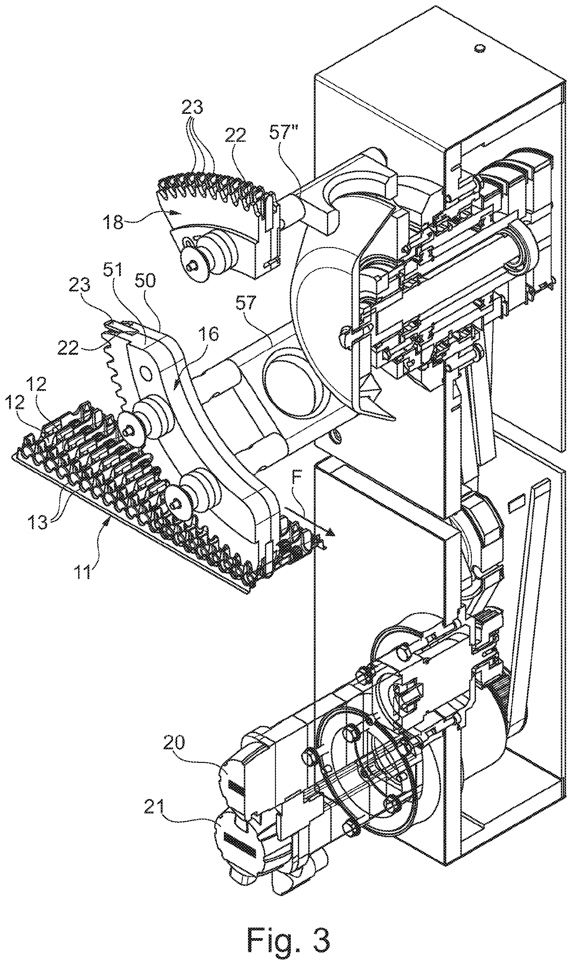

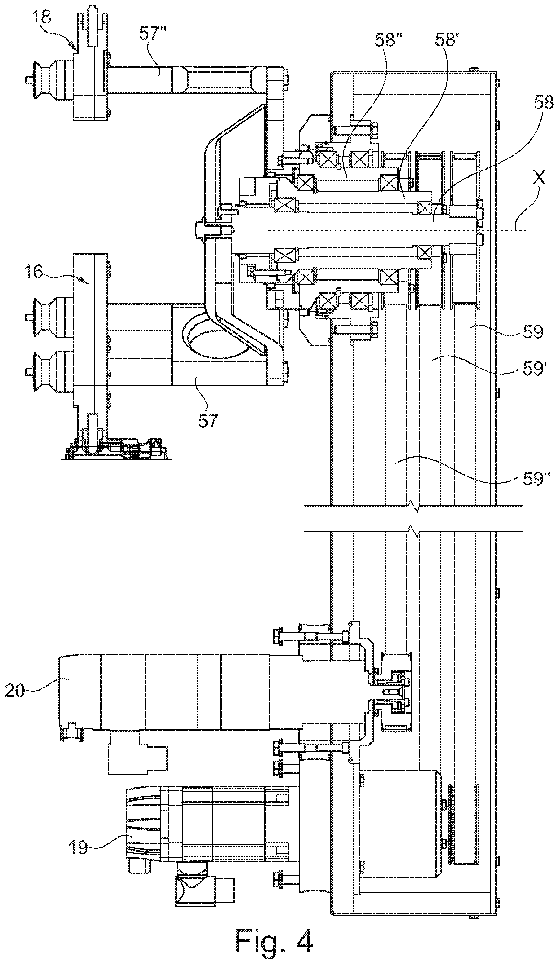

Figures 3 to 8 show some aspects of the extraction device, the composition of the single wheel or star sector 16, 17 and 18 and the rotation movement of these sectors according to a circumference.

The extraction device, as already mentioned, comprises three wheel sectors 16, 17 and 18, or star segments, caused to rotate around a common horizontal axis X by means of respective motors 19, 20 and 21. The wheel sectors 16, 17 and 18 on an outer peripheral surface, inserted in a suitable arched groove 22, carry a series of pincers 23 for extracting the single syringe 12.

As clearly shown in the figures, the single wheel sector 16, 17 and 18, rotating around the axis X, moves on a vertical plane and follows a circular trajectory, indicated by the arrow F (figure 3), which proves to be in a direction tangent to the feeding plane 14 and, therefore, to the trays 11. The three wheel sectors 16, 17 and 18 occupy less than three quarters of the circumference they are moving along and can thus follow each other in the above-mentioned trajectory.

Each single wheel sector 16, 17 and 18 or star segment comprises a body in two halves 50, 51 on whose peripheral surface having a larger diameter facing outwardly, facing recesses are formed, which define the previously mentioned arched groove 22.

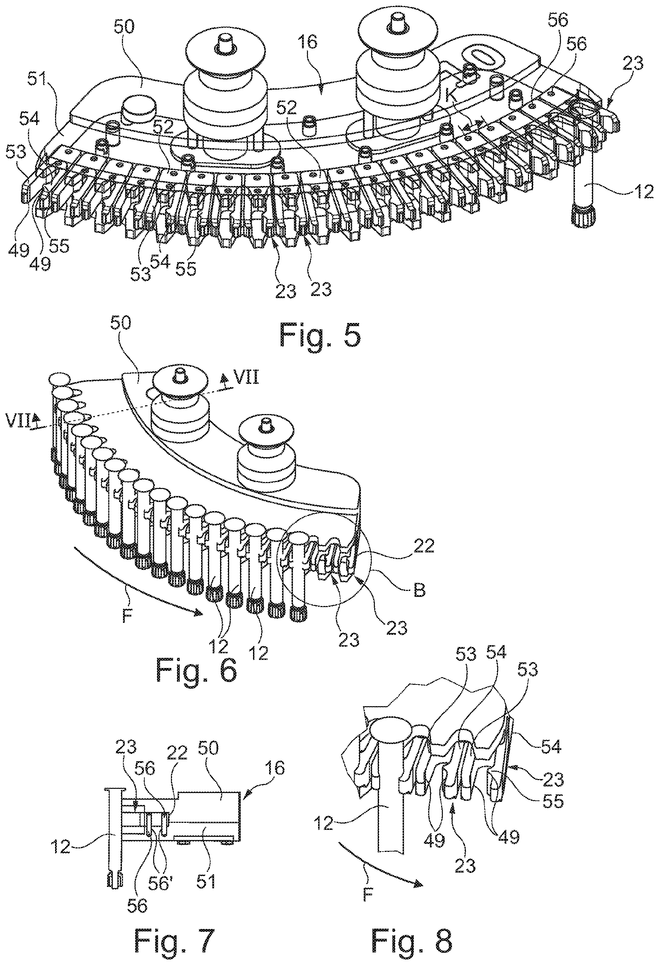

The series of extraction pincers 23 of the single syringe 12 (figures 5 to 8), as already mentioned, arranged at a first distance k from each other, is inserted in this groove 22.

These pincers or jaws 23 are made of plastic material and have a body 52 constrained to one of said sectors and from which two side arms 53, 54 extend, yielding to form an elongated U. The first arm 53, slightly curved in a recess or curved portion 49 towards the free end for housing the syringe 12, has a substantially constant thickness. The second arm 54 is provided with an intermediate tooth 55 protruding inwardly and facing the other arm 53. This tooth 55 forms a supporting surface for the syringe 12 which it houses in a curved portion 49 mirroring that 49 provided on the first arm 53.

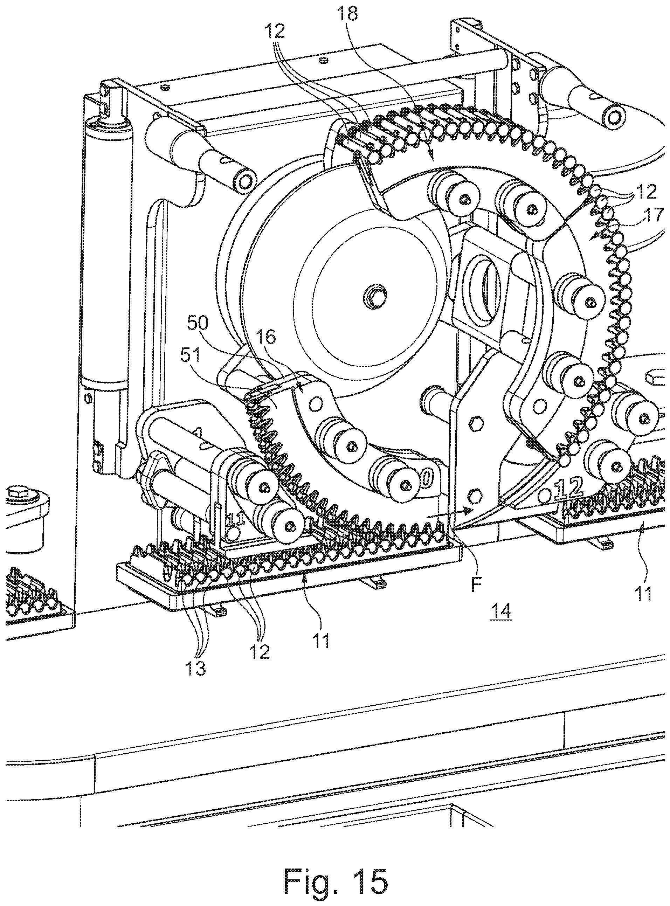

The single extraction pincer 23 is in fact brought from the sector 16 (as shown in figures 1 and 15) or 17 or 18 to become tangentially engaged on the syringes 12 according to the arrow F and allows the syringe 12 to be accommodated inside the two arms 53, 54.

More specifically, the syringe 12 is arranged within the curved portions 49 of the arms 53 and 54, with the arm 54 advancing first with respect to the arm 53. This causes the syringe 12, when it becomes engaged between the arms 53, 54, to become abutted against the notch 55 of the arm 54. This positioning causes the syringe 12 to be extracted from the impression 13 of the tray 11 without any effort, gently, without any rubbing or friction.

The sector in extracting action brings one pincer after another to extract a respective syringe 12 without any effort.

Holes 56' are provided in the body 52, which receive fastening pins 56 to the respective sector within one of the two halves 50, 51 of the body of the wheel sector 16, 17 and 18 or star segment.

Each wheel sector 16, 17 and 18 or star segment is caused to rotate around the axis X as it is carried by a respective arm 57, 57', 57" connected to a respective section of shaft 58, 58', 58". These sections of shaft 58, 58', 58" are arranged coaxially with respect to each other and are driven by motors 19, 20 and 21 through transmission belts 59, 59', 59". The motors 19, 20 and 21 are determined in particular movements in the electronic cam so that the wheel sectors 16, 17 and 18 or star segment follow each other with speed variations and stoppages independently of each other, so as to ensure a continuous and constant supply of sectors full of syringes beneath the head 24 of the withdrawal robot 25.

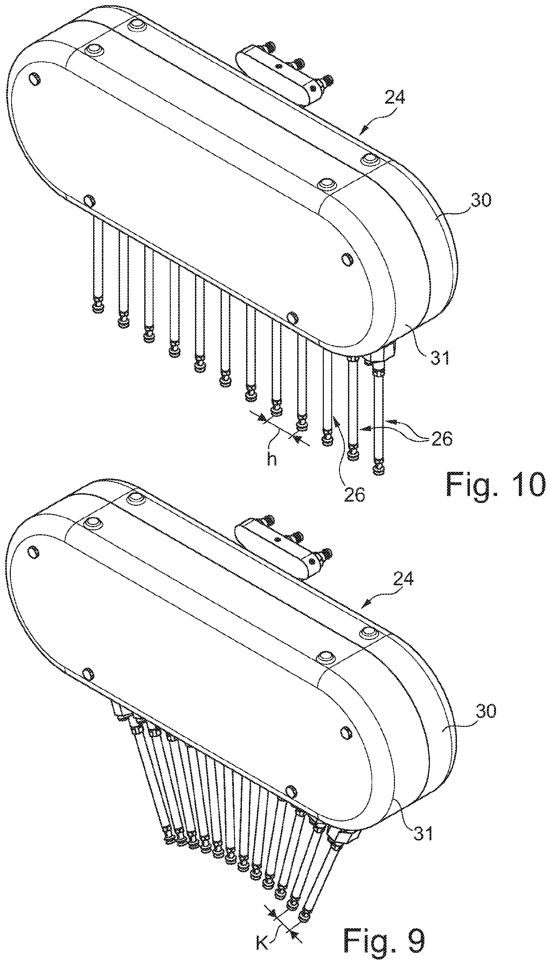

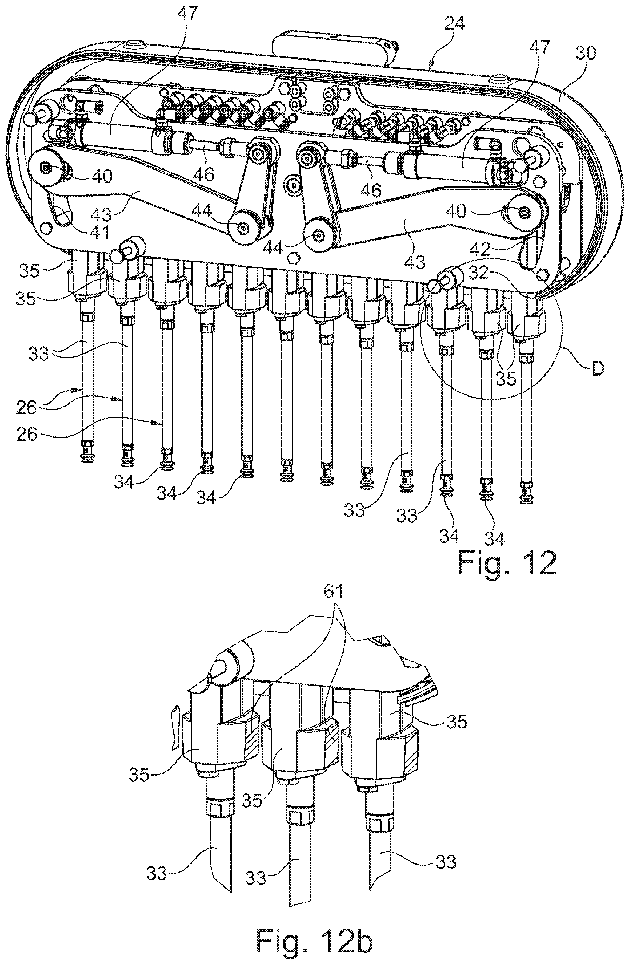

With respect to figures 9 to 14b, these show the robot head and its functionality in an exemplary and non-limiting embodiment, in greater detail.

The head 24 of the withdrawal robot 25 has a series of gripping elements 26 which are movable and variable in position with respect to each other according to the choice of the pitch or distance between consecutive syringes 12, both in the gripping position and in the deposition or release.

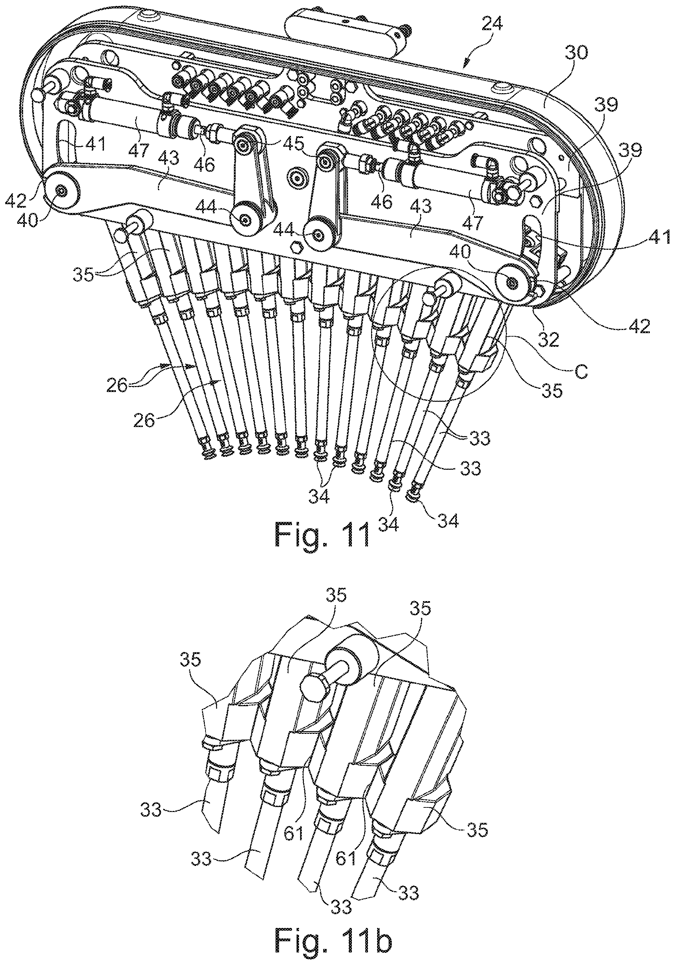

The head 24 comprises an external box in two coupled parts 30, 31 which is arranged vertically with a lower elongated opening 32 formed halfway on each of the two parts 30, 31. The gripping elements 26 protrude from said opening 32 and are in the form of a series of rods 33 provided at their free ends, with gripping elements (figures 11-14). In the example shown, each gripping element consists of a sucker 34, but a pincer or other similar gripping element could be identically provided.

The head contains a movement and position-variation mechanism of the gripping elements 26, with respect to each other, which is described hereunder in its exemplary but non-limiting embodiment.

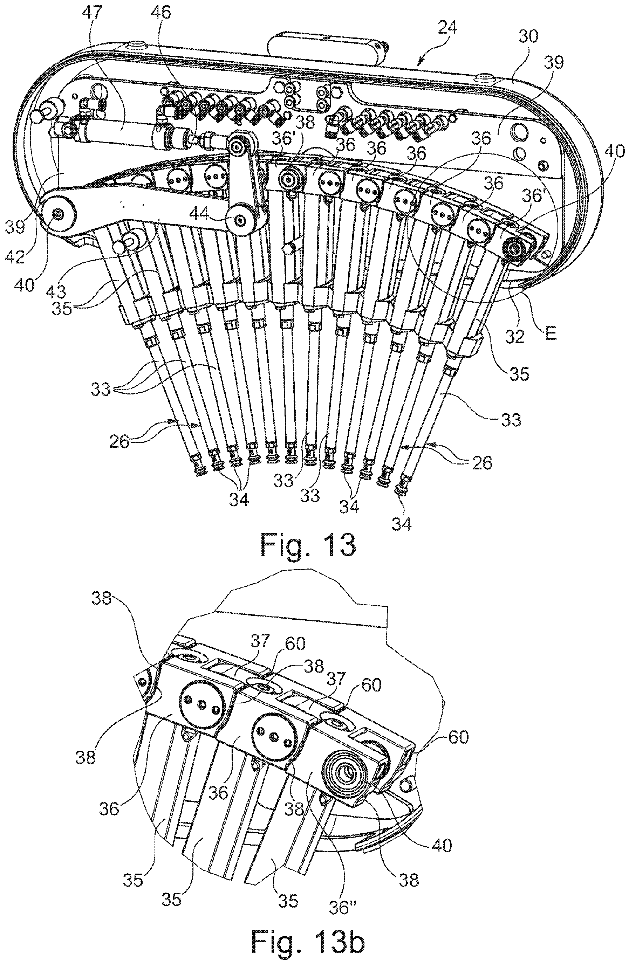

The rods 33 are arranged at their other end, and each rod extends from first free ends of tubular bodies 35. At second ends, the tubular bodies are integral with links 36, arranged in the form of a chain articulated consecutively by means of intermediate biscuits 37 hinged to the same (figures 13-14b). The single links 36 have shaped side surfaces 38 collaborating with each other so that subsequent links 36 can move on a plane while remaining in contact with each other.

It should also be noted that there are twelve links 36 in the example carrying twelve tubular bodies 35, twelve rods 33 with respective suckers 34, but they could be in another preselected number.

One link 36', intermediate between the other links 36, is free to rotate around pins 38 (figure 13), which are hinged on plates 39. These plates 39 are arranged integrally inside the two coupled parts 30, 31 of the box.

Final end links 36" of the series of links 36 also carry pins 40 (figures 11 and 13) that are engaged in arched slots 41 formed at opposite ends of the plates 39. These pins 40 are in turn connected and arranged free to rotate in end openings 42, the latter formed at a first end of square rods 43. Said square rods 43 are in turn centrally hinged in a pin 44 integral with the plates 39 around which they oscillate. Opposite ends of these square rods 43 are connected by means of pins 45 to ends of stems 46 of actuation cylinders 47 articulatedly connected at their free end to the plates 39. The actuation of the cylinders 47 causes an oscillation of the square rods 43 with a variation in the position of the series of links 36 and therefore of the gripping elements 26. Thanks to the presence of the arched slots 41, in fact, the links 36 acquire two different extreme operating positions. In a position close to each other (figures 13 and 13b) the links 36 are arranged in an arc and with gripping elements 26 which are arranged almost converging towards a central point. Supporting surfaces 60 obtained in consecutive links 36 in the upper part of the same are detached in this position. Furthermore, facing supporting surfaces 61 are provided on the tubular bodies 35, which are arranged in contact with each other to favour the convergent position of the gripping elements 26.

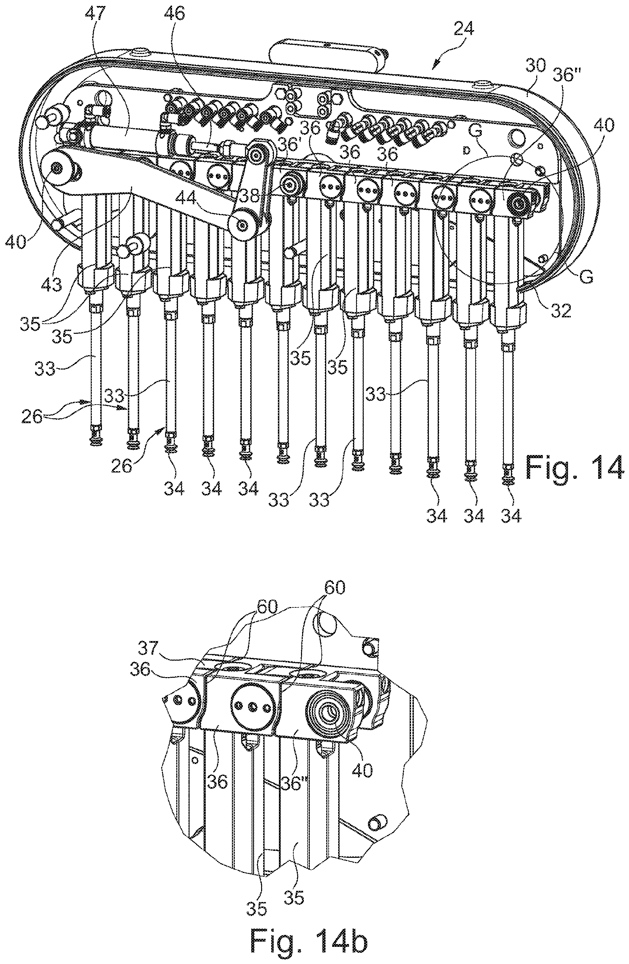

In a second position, aligned along a straight line (figures 14 and 14b), the links 36 are shifted so that the gripping elements 26 are all parallel to each other and spaced apart. The above-mentioned supporting surfaces 60 in this position are caused to be arranged in support and favour the aligned and parallel position of the gripping elements 26.

The first position, with rods close together and converging at one point, corresponds to the withdrawal position of the syringes 12 from the wheel sectors 16, 17 and 18, or star segments, when brought into the withdrawal position with syringes arranged according to the above-mentioned first distance k. The second position, on the other hand, with parallel rods, corresponds to the release position of the syringes 12 on the linear conveyor 27 carried by the head 24 of the robot 25.

In this second position, a second distance h is obtained between successive syringes, different from the first distance k they had when they were carried by said wheel sectors or star segments or by the trays 11, the second distance h being exactly the correct distance for deposition in the linear conveyor 27.

In this way, it can be seen how the robot 25 in moving its head 24 in space towards an underlying linear conveyor 27 is capable of varying the pitch or distance between successive gripped syringes 12 by suitably activating the cylinders 47 between the two above-mentioned positions. In this way, the head 24 of the robot 25, on the one hand, effects a correct withdrawal from the sectors 16, 17 or 18 thanks to the correct position also determined by the supporting surfaces 61 of the tubular bodies 35 and, on the other hand, a linear deposition on the conveyor 27 with the deposition pitch always correct determined by the supporting surfaces 60 of the links 36.

If syringes 12 having different diameters, taken from sectors with different pincers 23 in trays with impressions having a different pitch, are to be treated and deposited correctly on the linear conveyor, the rods 33 of the gripping elements 26 must be replaced with rods having a variable length.

Thanks to the particular head 24 of the robot 25 described above, the user can even intervene by defining a preselected and defined number of syringes.

This can be particularly useful and advantageous if the format of the syringe varies, and the type of tray and its number of internal impressions are also correspondingly variable.

This is effected using a particular algorithm that allows the speed/positioning of the star sectors to be varied so that they can "move", distributing the syringes step by step and continuously (without holes). All of this takes place even if the number of syringes inside the tray has changed according to the size of the syringe/composition of the tray.

This is also thanks to the fact that the robot head is capable of taking the syringes at a certain pitch (distance between one syringe and the other) from the star sector and releasing these syringes to a subsequent process station at a different pitch (distance between one syringe and the other).

The three figures 15, 16 and 17 show the movement sequence of a wheel sector 16, 17 and 18 or star segment when it acts on a tray which is moved and advanced at a predetermined distance from a previous tray and from a subsequent tray on the horizontal feeding plane 14.

The first figure 15 shows how the sector, for example 16, carries the series of extraction pincers 23 in correspondence with the initial part of the tray 11 carrying a predetermined number of syringes 12.

The first of these extraction pincers 23 becomes engaged on the first syringe 12, present in a first recess or impression 13 of the tray 11, and removes it, carrying it with it. The same operation is effected by the subsequent pincers 23 which act on the subsequent syringes 12, arranged in the subsequent impressions 13 which are provided in the tray 11.

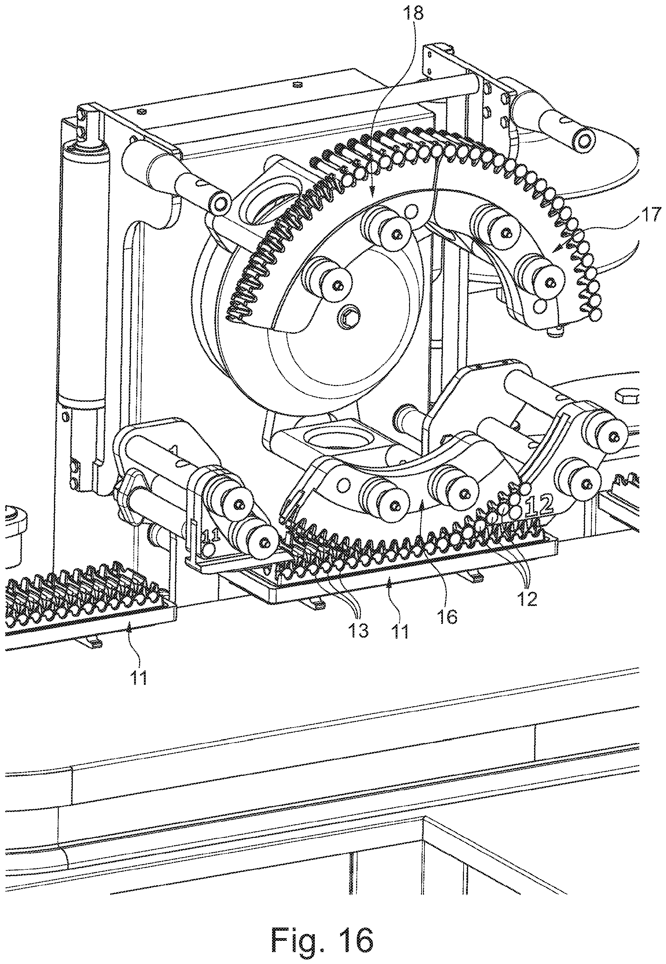

The second figure 16 shows how the sector 16, continuing in its rotation, already has the respective syringes 12 in a certain number of extraction pincers 23 and how the tray 11 is simultaneously moved forward in synchronism on the horizontal feeding plane 14.

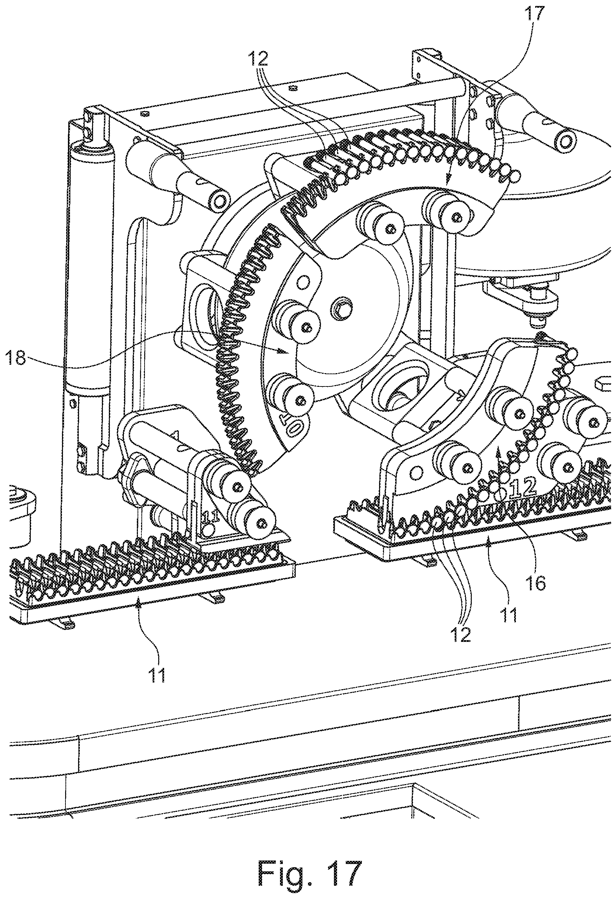

Finally, the third figure 17 shows how the sector 16 has withdrawn several syringes 12 and the tray 11, which is moving forward in perfect synchronism, has most of the impressions 13 empty. The sector 16 has therefore almost completed the extraction of the syringes 12 from the tray 11.

The wheel sector or star segment 16 in this example, thanks to the particular design and conception of the extraction pincers 23 present in it, gently extracts the single syringe 12 from the tray 11, avoiding any possible friction or staining between the parts in question.

The present invention, in fact, allows the wheel sector or star segment 16 to "engage with" the syringes 12 tangentially and one by one in succession, by means of a gentle extraction and without "forcing" the extraction of the single syringe 12. This is thanks to the arrangement of the parts and to the fact that the single pincer or jaw 23 is produced with the two side arms 53, 54 yielding. More specifically, an arm 53 in its curved portion 49 accommodates the syringe 12 which is also accommodated in the facing curved portion 49 of the other arm 54. This second arm 54 is provided with an intermediate notch 55 protruding inwardly which collaborates for receiving the syringe 12 with ease and without any effort.

This arrangement of parts ensures a perfect and constant synchronism of the wheel sector 16, 17 or 18 for the extraction of the syringes 12 with the continuous movement of the tray 11 in perfect synchronism at the same advancement rate.

The three figures mentioned above also show how their movement is effected in this rotary motion around the axis X.

The wheel sectors 16, 17 and 18 or star segment are in fact determined in particular movements in the electronic cam so that they follow each other in such a way as to ensure a continuous and constant supply of sectors full of syringes 12 to the above head 24 of the withdrawal robot 25, which in this way has a constant and continuous supply of syringes 12.

In practice, the sectors 16, 17 and 18 have accelerations and decelerations which are such that the single sector, for example the sector 16 in figure 15, when brought above the single tray 11 is driven at the same peripheral speed and follows it until the tray 11 is completely emptied for the various positions acquired between the parts, some of which are shown in figures 15 to 17.

At the end of the extraction of the syringes 12 (figure 17), the sector then accelerates and moves to the end of the previous sector which had already been filled with syringes (see for example the sector 17 which goes to the end of the sector 18 in figure 15).

The single sector, for example the sector 18 in figure 1, which on the other hand must face the head 24 of the robot 25 to allow the withdrawal of the syringes, moves to the withdrawal position and stops them to specifically allow the withdrawal of the syringes 12.

The sector, for example the sector 18 in figure 17, once emptied, is then rapidly prepared for facing a new tray 11 full of syringes, which just as rapidly becomes synchronized with the sector 18 on arrival. All of this is then moved forward at the same speed when the extraction of the syringes 12 from the tray is initiated by the sector equipped with extraction pincers 23 of the single syringe 12.

This alternation between accelerations, advancing at a constant speed, accelerations, stoppages, etc. is indicated as an "electronic cam" controlled exclusively by a program and by the speed variations of the motors 19, 20 and 21 which synthesize a certain law of motion.

The schematic figures from 18 to 23 show how a sector moves in its circular path around the axis X.

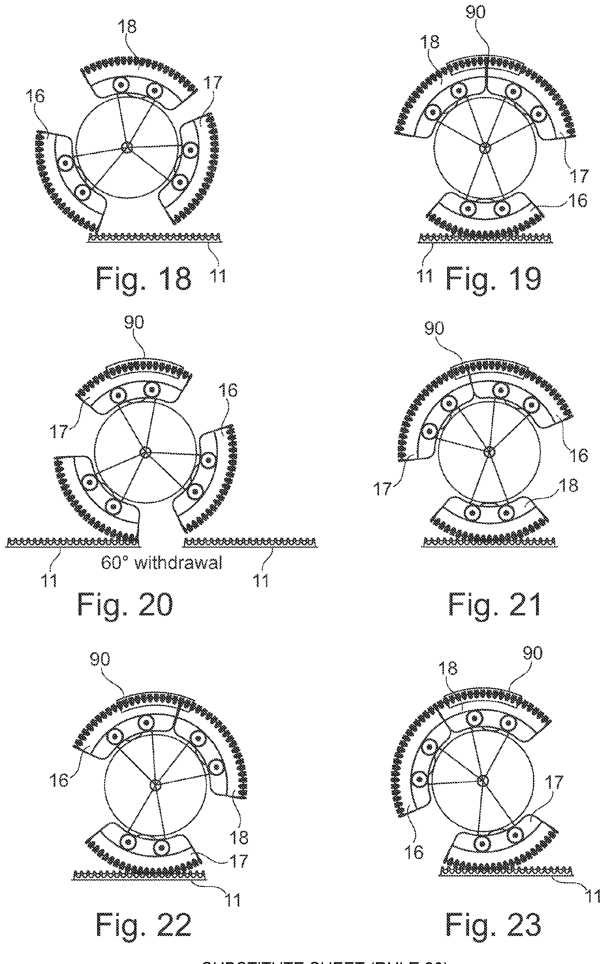

Figures 18, 19, 20 repeat the movement of the single sector in its extraction phase, i.e. when, with the peripheral speed equal to that of the advancement of the tray 11, it extracts the syringes from the tray itself. The sector shown for example is sector 16.

At the end of this extraction phase, the sector 16 rapidly accelerates to the position of figure 21 immediately behind the preceding sector 17. In this position both the sector 17 and the sector 16 stop. In this stop position of the sectors 16, 17 a predetermined number of syringes is withdrawn, partly from the sector 17 together with some initial syringes carried by the sector 16 thus moved. This withdrawal is indicated with 90 in figure 19 from the sectors 16 and 17, and also with 90 in figure 20 from the sector 17 and with 90 in figure 21 from the sectors 16 and 17.

Figure 22 shows a subsequent position in which the emptied sector 17 has rapidly moved until it is over a new tray to extract new syringes. The sector 16, on the other hand, which has advanced in rotation for a certain length, stops and together with the sector 18, presents itself for extraction. All of this naturally occurs in sectors 16, 18 stationary in the withdrawal position, wherein the withdrawal is indicated with 90 as in the previous cases.

Finally, figure 23 shows how the sector 16, also emptied, starts its rapid rotation to move onto a subsequent tray whereas the sector 17 is continuing its extraction from the tray and the sector 18 is stationary to allow the withdrawal of the predetermined number 90 of 12 syringes mentioned above.

It should also be noted that the invention proposes a new method.

This is in fact a method for the extraction of syringes contained in a tray 11 and their transfer to a continuous conveyor 27. As can be seen, the trays 11 are provided with a series of recesses or impressions 13 which house a series of syringes 12 or the like and are caused to move forward and advance at a predetermined distance from each other on a feeding surface 14 in steps and/or continuously. In this way, the trays are brought beneath a device for extracting the syringes from the trays, wherein the extraction device comprises the wheel sectors or star segments, 16, 17 and 18, caused to rotate around a common horizontal axis X according to a circular path.

The wheel sectors or star segments 16, 17 and 18 have on an outer peripheral surface formed as an arc of circumference, a series of extraction pincers 23 of the single syringe 12 arranged between each other at a first reciprocal distance *k.* This distance k is equal to the distance between recesses or impressions 13 of trays 11.

Furthermore, a robot head intervenes in the method which is provided with movement in space and which provides a series of gripping elements 26 for withdrawing said syringes 12 carried by the sectors and releasing them onto the linear conveyor.

The method of the invention provides for a series of innovative steps.

A step is in fact provided for extracting said syringes one at a time from said trays by means of said pincers carried by said sectors, wherein said sectors are caused to rotate tangent to said trays which move forward in synchronism with the rotation of the sectors.

This extraction has been found to be without any friction and such as to not damage the syringes.

This step is followed by a step for withdrawing all of the syringes together carried by said pincers of a single sector by means of said withdrawal elements of said robot head, once the rotation of said single sector has been stopped.

Once the syringes have been withdrawn, this is followed by a step for transferring all of said syringes withdrawn by said robot head from said sectors to a position above said linear conveyor to arrange them in the housings 48 of the conveyor 27.

To do this, an intermediate and completely innovative step must be implemented. This step, which is effected during the transfer of said robot head, causes the syringes carried by the withdrawal elements positioned at a first distance k to be moved to a second distance h, different from the first distance k, for depositing all the syringes together on said linear conveyor 27 in the relative housings 48.

For this purpose, the gripping elements 26 are movable and variable in position with respect to each other.

Finally, there is naturally a step for releasing all of the syringes brought together at the second distance k on the continuous linear conveyor.

As seen and written, the examples refer to syringes, but the method and the system in its parts are identically suitable for glass containers as specified above.

Further variants are possible from the embodiments described above, provided that they fall within the scope of protection as defined by the claims.

In practice, the materials used, as also the dimensions, can vary according to the technical requirements.

The protection scope of the present invention is defined by the enclosed claims.

## Claims

1. A method for extracting glass containers contained in a tray (11) and transferring them to a linear conveyor (27), wherein a series of trays (11), provided with a series of recesses or impressions (13), house a series of glass containers (12) and are caused to move and advance at a predetermined distance from each other on a feeding plane (14) in steps and/or continuously to be brought beneath an extraction device of the glass containers (12) from the trays (11), wherein the extraction device comprises a series of extraction pincers (23) of the single glass container (12) arranged between each other at a first reciprocal distance (k) equal to the distance between said recesses or impressions (13), wherein the method provides for a step for extracting said glass containers (12) from said trays (11) by means of said pincers (23), a step for transferring all of said glass containers withdrawn by said extraction device from said trays to a position above said linear conveyor and a step for releasing all of said glass containers together on said linear conveyor;
wherein the extraction device comprises wheel sectors or star segments (16, 17 and 18), caused to rotate around a common horizontal axis (X) according to a circular path, said wheel sectors or star segments (16, 17 and 18), carrying on an outer peripheral surface formed as an arc of circumference, said series of extraction pincers (23) of the single glass container (12); wherein during the extraction step said sectors are caused to rotate tangent to said trays (11) which advance in synchronism with the rotation of the sectors and said glass containers (12) are extracted one at a time from said trays (11);
a head (24) of a robot (25) is also provided, which is provided with movement in space and which provides a series of gripping elements (26) for the withdrawal of said glass containers (12) carried by said sectors (16, 17 and 18) and their release on said linear conveyor (27), the method providing
a step for withdrawing together all of said glass containers (12) carried by said pincers (23) of a single sector (16 or 17 or 18), by means of said withdrawing elements of said robot head, when the rotation of said single sector (16 or 17 or 18) from which the withdrawal step is effected, is stopped;
a step for transferring all of said glass containers withdrawn by said robot head from said single sector to a position above said linear conveyor;
a step which is effected during the transfer of said robot head wherein said glass containers carried by said withdrawing elements positioned at a first distance (k) are moved to a second distance (h), different from the first distance (k), for depositing said glass containers on said linear conveyor, wherein said gripping elements (26) are movable and variable in position with respect to each other;

2. The method according to claim 1, wherein said glass containers (12) are arranged in said trays (11) at a first distance (k) determined by said series of recesses or impressions (13) of said trays and said glass containers are arranged on said linear conveyor (27) at a second reciprocal distance (h) which is different from the first distance (k) and which is determined by housings (48) provided in said linear conveyor (27).

3. The method according to claim 1 or 2, wherein said wheel sectors or star segments (16, 17 and 18) are caused to rotate around a common horizontal axis (X) according to a circular path and so as to follow each other with variations in speed and independent stoppages of one sector with respect to the others so as to ensure a continuous and constant supply of sectors full of glass containers (12) beneath the head (24) of the withdrawal robot (25).

4. The method according to one or more of the previous claims, wherein said extraction pincers (23), which are made of plastic material, are used and have a body (52), integral with said sectors, from which two yielding side arms extend (53, 54) to form an elongated U, wherein the first arm (53) provides a curved portion (49) towards the free end, and the second arm (54), which also provides a curved portion (49) mirroring that of the first arm (53) and which is also provided with an intermediate notch (55), protruding inwardly, facing the other arm (53) and which forms a supporting surface for the glass container (12).

5. The method according to claim 4, wherein each of the pincers (23) is brought by the respective sector (16, 17 or 18) to engage on a single glass container (12) arranged in a tray according to a path tangential to the tray with the second arm (54) which advances first with respect to the first arm (53) so that the single glass container (12) when engaging between the arms (53, 54) becomes abutted against the notch (55) of the second arm (54) and is extracted from the single pincers (23).

6. A system for the extraction of glass containers contained in a tray (11) and transferring them to a continuous linear conveyor (27), comprising:
a feeding plane (14) for feeding in steps and/or continuously a series of trays (11), which are provided with a series of recesses or impressions (13), which house a series of glass containers (12) or the like;
a device for extracting the glass containers from the trays, wherein the extraction device comprises a series of pincers (23) for extracting the single glass container (12) arranged between each other at a first reciprocal distance (k) equal to the distance between said recesses or impressions (13) of said trays (11); wherein in said system the trays (11) are caused to move on said feeding plane (14) and advance at a predetermined distance from each other to be brought beneath said device for extracting the glass containers (12) from the trays (11);
**characterized in that** said extraction device comprises wheel sectors or star segments (16, 17 and 18), caused to rotate around a common horizontal axis (X) according to a circular path, said wheel sectors or star segments (16, 17 and 18), carrying, on a peripheral surface formed as an arc of circumference, said series of extraction pincers (23) of the single glass container (12); the system comprising
a head (24) of a robot (25) which is provided with movement in space and which provides a series of gripping elements (26) for the removal of said glass containers (12) carried by said sectors and their release on said linear conveyor (27);
wherein in said system
a single sector (16, 17 or 18) is caused to translate on a single tray (11) engaging one pincer (23) after another on one glass container (12) after another contained in said tray (11), wherein said single sector (16, 17 or 18) is caused to rotate tangent to said tray (11) which moves forward in synchronism with the rotation of the sector and extracts one glass container after another from the advancing tray;
the gripping elements (26) of said robot (25) head (24) withdraw together all of the glass containers (12) carried by said pincers (23) of a single sector (16, 17 or 18) by means of said gripping elements (26), when the rotation of said single sector from which the withdrawal is effected, is stopped;
said robot head provides a mechanism (43, 47) for the movement and variation in position of said gripping elements (26), with respect to each other, wherein said mechanism moves said gripping elements (26) of said glass containers (12) from a first distance (k) corresponding to the extraction distance from said trays (11) to a second depositing distance (h) of said containers on said linear conveyor (27).

7. The system according to claim 6, wherein said device for extracting the glass containers from the trays comprises three wheel sectors or star segments, (16, 17 and 18) which are individually controlled by a respective motor (19, 20, 21) whereby they are caused to rotate around a common horizontal axis (X) according to a circular path and so as to follow each other with speed variations and independent stoppages of one sector with respect to the others so as to ensure a continuous and constant supply of sectors (16, 17 or 18) full of glass containers (12) beneath the head (24) of the withdrawal robot (25) .

8. The system according to claim 6 or 7, wherein each of said extraction pincers (23) is made of plastic material and has a body (52) constrained to one of said sectors from which two yielding side arms (53, 54) extend forming an elongated U, wherein the first arm (53) provides a curved portion (49) towards the free end and the second arm (54) also provides a curved portion (49) mirroring that of the first arm (53) and is also provided with an intermediate notch (55), protruding inwardly, facing the other arm (53), and forms a supporting surface for the single glass container (12).

9. The system according to one or more of the previous claims from 6 to 8, wherein said head (24) of a robot (25) comprises an external box in two coupled parts (30, 31) which is arranged vertically with a lower elongated opening thereof (32) half of which is obtained on each of the two parts (30, 31), the box containing said mechanism for the movement and variation in position of said gripping elements (26) and from the opening (32) from whose box said gripping elements emerge (26) produced in the form of a series of rods (33) provided at their free ends with gripping elements (34).

10. The system according to claim 9, wherein said rods (33) of said gripping elements (26) are each arranged and extend from first free ends of tubular bodies (35), whereas second ends of the tubular bodies (35) are integral with links (36), arranged in the form of a chain articulated consecutively by means of intermediate biscuits (37) hinged to the same, wherein single links (36,36',36") have shaped side surfaces (38) collaborating with each other so that subsequent links (36) can move on a plane while remaining in contact with each other.

11. The system according to claim 10, wherein an intermediate link (36') of said set of links (36) extends into pins (38) which are constrained free to rotate with plates (39) which are arranged integral within the two coupled parts (30, 31) of the box.

12. The system according to claim 11, wherein final end links (36") of the series of links (36) carry pins (40) which engage in arched slots (41) formed at opposite ends of the plates (39), actuators (47) being provided for moving said pins (40) within said slots (41).

13. The system according to claim 12, wherein said pins (40) are connected and rotate in end openings (42) formed at a first end of square rods (43) which are in turn hinged centrally in a pin (44) integral with the plates (39), opposite ends of said square rods (43) are connected by pins (45) to the ends of stems (46) of said actuators (47) which are cylinders articulately connected at their free end to the plates (39).

14. The system according to claim 13, wherein said actuators (47) cause an oscillation of the square rods (43) with variation in the position of the series of links (36) and therefore of the gripping elements (26).

15. The system according to claim 13 or 14, wherein said actuators (47) cause an oscillation of the square rods (43) with variation in the position of the series of links (36), said links (36) acquiring, thanks to the presence of the arched slots (41), two different extreme operating positions, i.e. a first position, close to each other in which the links (36) are arranged in an arc and with gripping elements (26) which are arranged almost converging towards a central point, and a second position in which the links are aligned according to a straight line causing the gripping bodies (26) to be arranged parallel to each other and spaced apart.

16. The system according to claim 15, wherein, in said first position, the supporting surfaces (61) formed, facing said tubular bodies (35), are arranged in contact with each other to favour the convergent position of the gripping elements (26).

17. The system according to claim 15 or 16, wherein supporting surfaces (60), formed in consecutive links (36) in their upper part, favour the arrangement of said gripping elements (26) all parallel and spaced apart.

18. The system according to one or more of the previous claims 6 to 17, wherein said gripping elements (26) provide replaceable rods (33) having a variable length.

## Patentansprüche

1. Verfahren zum Entnehmen von Glasbehältern, die in einer Schale (11) enthalten sind, und zum Übertragen derselben zu einem Linearförderer (27), wobei eine Reihe von Schalen (11), die mit einer Reihe von Ausnehmungen oder Vertiefungen (13) versehen sind, eine Reihe von Glasbehältern (12) aufnehmen, und bewirkt wird, dass sich diese in einem vorbestimmten Abstand voneinander auf einer Zuführebene (14) schrittweise und/oder kontinuierlich bewegen und vorrücken, um unter eine Entnahmevorrichtung der Glasbehälter (12) aus den Schalen (11) gebracht zu werden, wobei die Entnahmevorrichtung eine Reihe von Entnahmezangen (23) des einzelnen Glasbehälters (12) umfasst, die zwischen einander in einem ersten reziproken Abstand (k) angeordnet sind, der gleich dem Abstand zwischen den Ausnehmungen oder Vertiefungen (13) ist, wobei das Verfahren einen Schritt zum Entnehmen der Glasbehälter (12) von den Schalen (11) mittels der Zangen (23), einen Schritt zum Übertragen aller Glasbehälter, die von der Entnahmevorrichtung aus den Schalen entnommen werden, zu einer Position über dem Linearförderer und einen Schritt zum Freigeben aller Glasbehälter zusammen auf dem Linearförderer vorsieht; wobei die Entnahmevorrichtung Radsektoren oder Sternsegmente (16, 17 und 18) umfasst, die veranlasst werden, sich um eine gemeinsame horizontale Achse (X) gemäß einer Kreisbahn zu drehen, wobei die Radsektoren oder Sternsegmente (16, 17 und 18) auf einer Außenumfangsfläche, die als ein Umfangsbogen ausgebildet ist, die Reihe von Entnahmezangen (23) des einzelnen Glasbehälters (12) tragen; wobei während des Entnahmeschritts die Sektoren veranlasst werden, sich tangential zu den Schalen (11) zu drehen, die synchron mit der Drehung der Sektoren vorrücken, und die Glasbehälter (12) nacheinander aus den Schalen (11) entnommen werden;
wobei auch ein Kopf (24) eines Roboters (25) vorgesehen ist, der mit Bewegung im Raum versehen ist und der eine Reihe von Greifelementen (26) zum Entnehmen der Glasbehälter (12), die von den Sektoren (16, 17 und 18) getragen werden, und zu deren Freigabe auf dem Linearförderer (27) vorsieht, wobei das Verfahren umfasst:
einen Schritt zum gemeinsamen Entnehmen aller Glasbehälter (12), die von den Zangen (23) eines einzelnen Sektors (16 oder 17 oder 18) getragen werden, mittels der Entnahmeelemente des Roboterkopfs, wenn die Drehung des einzelnen Sektors (16 oder 17 oder 18), von dem der Entnahmeschritt ausgeführt wird, angehalten wird;
einen Schritt zum Übertragen aller Glasbehälter, die von dem Roboterkopf entnommen werden, von dem einzelnen Sektor zu einer Position über dem Linearförderer;
einen Schritt, der während des Transfers des Roboterkopfs ausgeführt wird, wobei die Glasbehälter, die von den Entnahmeelementen getragen werden, die in einem ersten Abstand (k) positioniert sind, zu einem zweiten Abstand (h), der sich von dem ersten Abstand (k) unterscheidet, bewegt werden, um die Glasbehälter auf dem Linearförderer abzulegen, wobei die Greifelemente (26) in ihrer Position in Bezug aufeinander beweglich und variabel sind.

2. Verfahren nach Anspruch 1, wobei die Glasbehälter (12) in den Schalen (11) in einem ersten Abstand (k) angeordnet sind, der von der Reihe von Ausnehmungen oder Vertiefungen (13) der Schalen bestimmt wird, und die Glasbehälter auf dem Linearförderer (27) in einem zweiten reziproken Abstand (h) angeordnet sind, der sich von dem ersten Abstand (k) unterscheidet und der von Gehäusen (48) bestimmt wird, die in dem Linearförderer (27) vorgesehen sind.

3. Verfahren nach einem der Ansprüche 1 oder 2, wobei die Radsektoren oder Sternsegmente (16, 17 und 18) veranlasst werden, sich um eine gemeinsame horizontale Achse (X) gemäß einer Kreisbahn zu drehen und einander mit Geschwindigkeitsschwankungen und unabhängigen Halten eines Sektors in Bezug auf die anderen zu folgen, um eine kontinuierliche und konstante Zufuhr von Sektoren, die mit Glasbehältern (12) gefüllt sind, unter dem Kopf (24) des Entnahmeroboters (25) sicherzustellen.

4. Verfahren nach einem der vorhergehenden Ansprüche, wobei die Entnahmezangen (23), die aus Kunststoffmaterial hergestellt sind, verwendet werden und einen Körper (52) aufweisen, der mit den Sektoren einstückig ist, von dem sich zwei nachgiebige Seitenarme (53, 54) erstrecken, um ein längliches U zu bilden, wobei der erste Arm (53) einen gekrümmten Abschnitt (49) in Richtung des freien Endes bereitstellt und der zweite Arm (54), der auch einen gekrümmten Abschnitt (49) bereitstellt, der denjenigen des ersten Arms (53) spiegelt und der auch mit einer Zwischenkerbe (55) versehen ist, die nach innen vorsteht, dem anderen Arm (53) zugewandt ist und der eine Auflagefläche für den Glasbehälter (12) bildet.

5. Verfahren nach Anspruch 4, wobei jede der Zangen (23) durch den jeweiligen Sektor (16, 17 oder 18) in Eingriff mit einem einzelnen Glasbehälter (12), der in einer Schale angeordnet ist, gemäß einer Bahn tangential zu der Schale mit dem zweiten Arm (54) gebracht wird, der zuerst in Bezug auf den ersten Arm (53) vorrückt, so dass der einzelne Glasbehälter (12), wenn er zwischen den Armen (53, 54) in Eingriff gelangt, gegen die Kerbe (55) des zweiten Arms (54) anstößt und aus den einzelnen Zangen (23) entnommen wird.

6. System zum Entnehmen von Glasbehältern, die in einer Schale (11) enthalten sind, und zum Übertragen derselben zu einem kontinuierlichen linearen Förderer (27), umfassend:
eine Zuführebene (14) zum schrittweisen und/oder kontinuierlichen Zuführen einer Reihe von Schalen (11), die mit einer Reihe von Ausnehmungen oder Vertiefungen (13) versehen sind, die eine Reihe von Glasbehältern (12) oder dergleichen aufnehmen;
eine Vorrichtung zum Entnehmen der Glasbehälter aus den Schalen, wobei die Entnahmevorrichtung eine Reihe von Zangen (23) zum Entnehmen des einzelnen Glasbehälters (12) umfasst, die in einem ersten gegenseitigen Abstand (k), der gleich dem Abstand zwischen den Ausnehmungen oder Vertiefungen (13) der Schalen (11) ist, zwischen einander angeordnet sind; wobei in dem System die Schalen (11) veranlasst werden, sich auf der Zuführebene (14) zu bewegen und sich in einem vorbestimmten Abstand voneinander vorzurücken, um unter die Vorrichtung zum Entnehmen der Glasbehälter (12) aus den Schalen (11) gebracht zu werden;
**dadurch gekennzeichnet, dass** die Entnahmevorrichtung Radsektoren oder Sternsegmente (16, 17 und 18) umfasst, die veranlasst werden, sich um eine gemeinsame horizontale Achse (X) gemäß einer Kreisbahn zu drehen, wobei die Radsektoren oder Sternsegmente (16, 17 und 18) auf einer Umfangsfläche, die als ein Umfangsbogen gebildet ist, die Reihe von Entnahmezangen (23) des einzelnen Glasbehälters (12) tragen; wobei das System einen Kopf (24) eines Roboters (25) umfasst, der mit Bewegung im Raum versehen ist und der eine Reihe von Greifelementen (26) zum Entfernen der Glasbehälter (12), die von den Sektoren getragen werden, und zu deren Freigabe auf dem linearen Förderer (27) bereitstellt;
wobei in dem System ein
einzelner Sektor (16, 17 oder 18) veranlasst wird, sich auf einer einzelnen Schale (11) in Eingriff mit der Zange (23) nacheinander auf dem Glasbehälter (12) nach dem anderen zu verschieben, der in der Schale (11) enthalten ist, wobei der einzelne Sektor (16, 17 oder 18) veranlasst wird, sich tangential zu der Schale (11) zu drehen, die sich synchron mit der Drehung des Sektors vorwärts bewegt und einen Glasbehälter nach dem anderen aus der vorrückenden Schale entnimmt;
die Greifelemente (26) des Kopfs (24) des Roboters (25) gemeinsam alle Glasbehälter (12), die von den Zangen (23) eines einzelnen Sektors (16, 17 oder 18) getragen werden, mittels der Greifelemente (26) zurückziehen, wenn die Drehung des einzelnen Sektors, aus dem die Entnahme erfolgt, angehalten wird;
der Roboterkopf einen Mechanismus (43, 47) für die Bewegung und Positionsvariation der Greifelemente (26) in Bezug aufeinander bereitstellt, wobei der Mechanismus die Greifelemente (26) der Glasbehälter (12) von einem ersten Abstand (k), der dem Entnahmeabstand von den Schalen (11) entspricht, zu einem zweiten Ablageabstand (h) der Behälter auf dem linearen Förderer (27) bewegt.

7. System nach Anspruch 6, wobei die Vorrichtung zum Entnehmen der Glasbehälter aus den Schalen drei Radsektoren oder Sternsegmente (16, 17 und 18) umfasst, die jeweils einzeln durch einen jeweiligen Motor (19, 20, 21) gesteuert werden, wodurch sie veranlasst werden, sich um eine gemeinsame horizontale Achse (X) gemäß einer Kreisbahn zu drehen und einander mit Geschwindigkeitsschwankungen und unabhängigen Halten eines Sektors in Bezug auf die anderen zu folgen, um eine kontinuierliche und konstante Zufuhr von Sektoren (16, 17 oder 18), die mit Glasbehältern (12) gefüllt sind, unter dem Kopf (24) des Entnahmeroboters (25) sicherzustellen.

8. System nach einem der Ansprüche 6 oder 7, wobei jede der Entnahmezangen (23) aus Kunststoffmaterial hergestellt ist und einen Körper (52) aufweist, der an einem der Sektoren befestigt ist, von dem sich zwei nachgiebige Seitenarme (53, 54) erstrecken, die ein längliches U bilden, wobei der erste Arm (53) einen gekrümmten Abschnitt (49) in Richtung des freien Endes bereitstellt und der zweite Arm (54) auch einen gekrümmten Abschnitt (49) bereitstellt, der denjenigen des ersten Arms (53) spiegelt und auch mit einer Zwischenkerbe (55) versehen ist, die nach innen vorsteht, dem anderen Arm (53) zugewandt ist und eine Auflagefläche für den einzelnen Glasbehälter (12) bildet.

9. System nach einem der Ansprüche 6 bis 8, wobei der Kopf (24) eines Roboters (25) einen externen Kasten in zwei gekoppelten Teilen (30, 31) umfasst, der vertikal mit einer unteren länglichen Öffnung (32) davon angeordnet ist, deren Hälfte an jedem der zwei Teile (30, 31) erhalten wird, wobei der Kasten den Mechanismus für die Bewegung und Positionsvariation der Greifelemente (26) und von der Öffnung (32) enthält, aus dessen Kasten die Greifelemente (26) hervorgehen, die in Form einer Reihe von Stangen (33) hergestellt sind, die an ihren freien Enden mit Greifelementen (34) versehen sind.

10. System nach Anspruch 9, wobei die Stangen (33) der Greifelemente (26) jeweils von ersten freien Enden von röhrenförmigen Körpern (35) angeordnet sind und sich davon erstrecken, während zweite Enden der röhrenförmigen Körper (35) integral mit Gliedern (36) ausgebildet sind, die in Form einer Kette angeordnet sind, die nacheinander mittels dazwischenliegendem Biskuits (37), die an denselben angelenkt sind, gelenkig verbunden ist, wobei einzelne Glieder (36, 36', 36") geformte Seitenflächen (38) aufweisen, die miteinander zusammenwirken, so dass sich nachfolgende Glieder (36) auf einer Ebene bewegen können, während sie miteinander in Kontakt bleiben.

11. System nach Anspruch 10, wobei sich ein dazwischenliegendes Glied (36') des Satzes von Gliedern (36) in Stifte (38) erstreckt, die dazu gezwungen sind, sich frei mit Platten (39) zu drehen, die integral innerhalb der zwei gekoppelten Teile (30, 31) des Kastens angeordnet sind.

12. System nach Anspruch 11, wobei finale Endglieder (36") der Reihe von Gliedern (36) Stifte (40) tragen, die in bogenförmige Schlitze (41) eingreifen, die an gegenüberliegenden Enden der Platten (39) ausgebildet sind, wobei Aktoren (47) zum Bewegen der Stifte (40) innerhalb der Schlitze (41) bereitgestellt sind.

13. System nach Anspruch 12, wobei die Stifte (40) in Endöffnungen (42) verbunden sind und sich drehen, die an einem ersten Ende von Vierkantstangen (43) ausgebildet sind, die wiederum zentral in einem Stift (44) angelenkt sind, der integral mit den Platten (39) ist, wobei gegenüberliegende Enden der Vierkantstangen (43) durch Stifte (45) mit den Enden von Schäften (46) der Aktoren (47) verbunden sind, die Zylinder sind, die an ihrem freien Ende gelenkig mit den Platten (39) verbunden sind.

14. System nach Anspruch 13, wobei die Aktoren (47) eine Oszillation der Vierkantstangen (43) mit Variation in der Position der Reihe von Gliedern (36) und daher der Greifelemente (26) bewirken.

15. System nach einem der Ansprüche 13 oder 14, wobei die Aktoren (47) eine Oszillation der Vierkantstangen (43) mit Variation in der Position der Reihe von Gliedern (36) bewirken, wobei die Glieder (36) dank des Vorhandenseins der bogenförmigen Schlitze (41) zwei unterschiedliche extreme Betriebspositionen einnehmen, d. h. eine erste Position, nahe zueinander, in der die Glieder (36) in einem Bogen und mit Greifelementen (26) angeordnet sind, die nahezu konvergierend zu einem zentralen Punkt angeordnet sind, und eine zweite Position, in der die Glieder gemäß einer geraden Linie ausgerichtet sind, was bewirkt, dass die Greifkörper (26) parallel zueinander und beabstandet angeordnet sind.

16. System nach Anspruch 15, wobei in der ersten Position die gebildeten Stützflächen (61), die den rohrförmigen Körpern (35) zugewandt sind, in Kontakt miteinander angeordnet sind, um die konvergierende Position der Greifelemente (26) zu begünstigen.

17. System nach einem der Ansprüche 15 oder 16, wobei Stützflächen (60), die in aufeinanderfolgenden Gliedern (36) in ihrem oberen Teil gebildet sind, die Anordnung der Greifelemente (26) alle parallel und beabstandet begünstigen.

18. System nach einem der Ansprüche 6 bis 17, wobei die Greifelemente (26) austauschbare Stangen (33) mit variabler Länge bereitstellen.

## Revendications

1. Procédé pour extraire des récipients en verre contenus dans un plateau (11) et transférer ceux-ci sur un transporteur linéaire (27), dans lequel une série de plateaux (11), pourvus d'une série d'évidements ou d'impressions (13), logent une série de récipients en verre (12) et sont amenés à se déplacer et à avancer à une distance prédéterminée les uns des autres sur un plan d'alimentation (14) par étapes et/ou en continu pour être portés sous un dispositif d'extraction des récipients en verre (12) des plateaux (11), dans lequel le dispositif d'extraction comprend une série de pinces d'extraction (23) du récipient en verre individuel (12) agencées les unes entre les autres à une première distance réciproque (k) égale à la distance entre lesdits évidements ou impressions (13), dans lequel le procédé prévoit une étape d'extraction desdits récipients en verre (12) desdits plateaux (11) au moyen desdites pinces (23), une étape de transfert de tous lesdits récipients en verre retirés par ledit dispositif d'extraction desdits plateaux vers une position au-dessus dudit transporteur linéaire et une étape de libération de tous lesdits récipients en verre conjointement sur ledit transporteur linéaire ;
dans lequel le dispositif d'extraction comprend des secteurs de roue ou des segments d'étoile (16, 17 et 18), amenés à tourner autour d'un axe horizontal commun (X) selon une trajectoire circulaire, lesdits secteurs de roue ou segments d'étoile (16, 17 et 18), transportant sur une surface périphérique extérieure formée comme un arc de circonférence, ladite série de pinces d'extraction (23) du récipient en verre individuel (12) ; dans lequel pendant l'étape d'extraction, lesdits secteurs sont amenés à tourner tangentiellement auxdits plateaux (11) qui avancent en synchronisme avec la rotation des secteurs et lesdits récipients en verre (12) sont extraits un à la fois desdits plateaux (11) ;
une tête (24) d'un robot (25) est également prévue, qui est pourvue d'un mouvement dans l'espace et qui fournit une série d'éléments de préhension (26) pour le retrait desdits récipients en verre (12) transportés par lesdits secteurs (16, 17 et 18) et leur libération sur ledit transporteur linéaire (27), le procédé fournissant
une étape pour retirer conjointement tous lesdits récipients en verre (12) transportés par lesdites pinces (23) d'un secteur individuel (16 ou 17 ou 18), au moyen desdits éléments de retrait de ladite tête de robot, lorsque la rotation dudit secteur individuel (16 ou 17 ou 18) à partir duquel l'étape de retrait est effectuée, est arrêtée ;
une étape pour transférer tous lesdits récipients en verre retirés par ladite tête de robot dudit secteur individuel vers une position au-dessus dudit transporteur linéaire ;
une étape qui est effectuée pendant le transfert de ladite tête de robot dans laquelle lesdits récipients en verre transportés par lesdits éléments de retrait positionnés à une première distance (k) sont déplacés à une seconde distance (h), différente de la première distance (k), pour déposer lesdits récipients en verre sur ledit transporteur linéaire, dans lequel lesdits éléments de préhension (26) sont mobiles et variables en position les uns par rapport aux autres.

2. Procédé selon la revendication 1, dans lequel lesdits récipients en verre (12) sont agencés dans lesdits plateaux (11) à une première distance (k) déterminée par ladite série d'évidements ou d'impressions (13) desdits plateaux et lesdits récipients en verre sont agencés sur ledit transporteur linéaire (27) à une seconde distance réciproque (h) qui est différente de la première distance (k) et qui est déterminée par des logements (48) prévus dans ledit transporteur linéaire (27).

3. Procédé selon la revendication 1 ou 2, dans lequel lesdits secteurs de roue ou segments d'étoile (16, 17 et 18) sont amenés à tourner autour d'un axe horizontal commun (X) selon une trajectoire circulaire et de manière à se suivre les uns les autres avec des variations de vitesse et des arrêts indépendants d'un secteur par rapport aux autres afin d'assurer un apport continu et constant de secteurs remplis de récipients en verre (12) sous la tête (24) du robot de retrait (25).

4. Procédé selon une ou plusieurs des revendications précédentes, dans lequel lesdites pinces d'extraction (23), qui sont faites en matière plastique, sont utilisées et ont un corps (52), solidaire desdits secteurs, à partir duquel deux bras latéraux ductiles s'étendent (53, 54) pour former un U allongé, dans lequel le premier bras (53) fournit une portion incurvée (49) vers l'extrémité libre, et le second bras (54), qui fournit également une portion incurvée (49) reflétant celle du premier bras (53) et qui est également pourvue d'une encoche intermédiaire (55), faisant saillie vers l'intérieur, faisant face à l'autre bras (53) et qui forme une surface de support pour le récipient en verre (12) .

5. Procédé selon la revendication 4, dans lequel chacune des pinces (23) est portée par le secteur respectif (16, 17 ou 18) à s'engager sur un récipient en verre individuel (12) agencé dans un plateau selon une trajectoire tangentielle au plateau avec le second bras (54) qui avance en premier par rapport au premier bras (53) de sorte que le récipient en verre individuel (12) lorsqu'il s'engage entre les bras (53, 54) vienne en butée contre l'encoche (55) du second bras (54) et soit extrait des pinces individuelles (23).

6. Système pour l'extraction de récipients en verre contenus dans un plateau (11) et pour le transfert de ceux-ci sur un transporteur linéaire continu (27), comprenant :
un plan d'alimentation (14) pour alimenter par étapes et/ou en continu une série de plateaux (11), qui sont pourvus d'une série d'évidements ou d'impressions (13), qui logent une série de récipients en verre (12) ou similaires ;
un dispositif pour extraire les récipients en verre des plateaux, dans lequel le dispositif d'extraction comprend une série de pinces (23) pour extraire le récipient en verre individuel (12) agencé entre elles à une première distance réciproque (k) égale à la distance entre lesdits évidements ou impressions (13) desdits plateaux (11) ;
dans lequel, dans ledit système, les plateaux (11) sont amenés à se déplacer sur ledit plan d'alimentation (14) et à avancer à une distance prédéterminée les uns des autres pour être portés sous ledit dispositif pour l'extraction des récipients en verre (12) des plateaux (11) ;
**caractérisé en ce que** ledit dispositif d'extraction comprend des secteurs de roue ou des segments d'étoile (16, 17 et 18), amenés à tourner autour d'un axe horizontal commun (X) selon une trajectoire circulaire, lesdits secteurs de roue ou segments d'étoile (16, 17 et 18), transportant, sur une surface périphérique formée comme un arc de circonférence, ladite série de pinces d'extraction (23) du récipient en verre individuel (12) ; le système comprenant
une tête (24) d'un robot (25) qui est pourvue d'un mouvement dans l'espace et qui fournit une série d'éléments de préhension (26) pour le prélèvement desdits récipients en verre (12) transportés par lesdits secteurs et leur libération sur ledit transporteur linéaire (27) ;
dans lequel dans ledit système
un secteur individuel (16, 17 ou 18) est amené à se déplacer en translation sur un plateau individuel (11) engageant une pince (23) après l'autre sur un récipient en verre (12) après l'autre contenu dans ledit plateau (11), dans lequel ledit secteur individuel (16, 17 ou 18) est amené à tourner tangentiellement audit plateau (11) qui se déplace vers l'avant en synchronisme avec la rotation du secteur et extrait un récipient en verre après l'autre du plateau en avancement ;
les éléments de préhension (26) de ladite tête (24) de robot (25) retirent conjointement tous les récipients en verre (12) transportés par lesdites pinces (23) d'un secteur individuel (16, 17 ou 18) au moyen desdits éléments de préhension (26), lorsque la rotation dudit secteur individuel à partir duquel le retrait est effectué, est arrêtée ;
ladite tête de robot fournit un mécanisme (43, 47) pour le mouvement et la variation de position desdits éléments de préhension (26), l'un par rapport à l'autre, dans lequel ledit mécanisme déplace lesdits éléments de préhension (26) desdits récipients en verre (12) d'une première distance (k) correspondant à la distance d'extraction desdits plateaux (11) à une seconde distance de dépôt (h) desdits récipients sur ledit transporteur linéaire (27).

7. Système selon la revendication 6, dans lequel ledit dispositif pour extraire les récipients en verre des plateaux comprend trois secteurs de roue ou segments d'étoile (16, 17 et 18) qui sont individuellement commandés par un moteur respectif (19, 20, 21) par lequel ils sont amenés à tourner autour d'un axe horizontal commun (X) selon une trajectoire circulaire et de manière à se suivre les uns les autres avec des variations de vitesse et des arrêts indépendants d'un secteur par rapport aux autres afin d'assurer un apport continu et constant de secteurs (16, 17 ou 18) remplis de récipients en verre (12) sous la tête (24) du robot de retrait (25).

8. Système selon la revendication 6 ou 7, dans lequel chacune desdites pinces d'extraction (23) est faite en matière plastique et a un corps (52) contraint à l'un desdits secteurs à partir duquel deux bras latéraux ductiles (53, 54) s'étendent en formant un U allongé, dans lequel le premier bras (53) fournit une portion incurvée (49) vers l'extrémité libre et le second bras (54) fournit également une portion incurvée (49) reflétant celle du premier bras (53) et est également pourvu d'une encoche intermédiaire (55), faisant saillie vers l'intérieur, faisant face à l'autre bras (53), et forme une surface de support pour le récipient en verre individuel (12).

9. Système selon une ou plusieurs des revendications précédentes 6 à 8, dans lequel ladite tête (24) d'un robot (25) comprend un boîtier externe en deux parties couplées (30, 31) qui est agencé verticalement avec son ouverture allongée inférieure (32) dont la moitié est obtenue sur chacune des deux parties (30, 31), le boîtier contenant ledit mécanisme pour le mouvement et la variation de position desdits éléments de préhension (26) et lesdits éléments de préhension (26) émergeant à partir de l'ouverture (32) du boîtier, produits sous la forme d'une série de barres (33) pourvues à leurs extrémités libres d'éléments de préhension (34).

10. Système selon la revendication 9, dans lequel lesdites barres (33) desdits éléments de préhension (26) sont chacune agencées et s'étendent à partir des premières extrémités libres des corps tubulaires (35), tandis que les secondes extrémités des corps tubulaires (35) sont solidaires des maillons (36), agencés sous la forme d'une chaîne articulée consécutivement au moyen de galettes intermédiaires (37) articulées à ceux-ci, dans lequel les maillons individuels (36, 36',36") ont des surfaces latérales profilées (38) coopérant les unes avec les autres de sorte que les maillons suivants (36) puissent se déplacer sur un plan tout en restant en contact les uns avec les autres.

11. Système selon la revendication 10, dans lequel un maillon intermédiaire (36') dudit ensemble de maillons (36) s'étend dans des broches (38) qui sont contraintes librement pour tourner avec des plaques (39) qui sont agencées de manière solidaire à l'intérieur des deux parties couplées (30, 31) du boîtier.

12. Système selon la revendication 11, dans lequel des maillons d'extrémité finaux (36") de la série de maillons (36) transportent des broches (40) qui s'engagent dans des fentes arquées (41) formées aux extrémités opposées des plaques (39), des actionneurs (47) étant prévus pour déplacer lesdites broches (40) à l'intérieur desdites fentes (41).

13. Système selon la revendication 12, dans lequel lesdites broches (40) sont reliées et tournent dans des ouvertures d'extrémité (42) formées à une première extrémité des barres carrées (43) qui sont à leur tour articulées au centre dans une broche (44) solidaire des plaques (39), les extrémités opposées desdites barres carrées (43) sont reliées par des broches (45) aux extrémités des tiges (46) desdits actionneurs (47) qui sont des cylindres reliés de manière articulée à leur extrémité libre aux plaques (39).

14. Système selon la revendication 13, dans lequel lesdits actionneurs (47) provoquent une oscillation des barres carrées (43) avec une variation de la position de la série de maillons (36) et donc des éléments de préhension (26).

15. Système selon la revendication 13 ou 14, dans lequel lesdits actionneurs (47) provoquent une oscillation des barres carrées (43) avec une variation de la position de la série de maillons (36), lesdits maillons (36) acquérant, grâce à la présence des fentes arquées (41), deux positions de fonctionnement extrêmes différentes, à savoir une première position, dans laquelle les maillons (36) sont agencés en arc et avec des éléments de préhension (26), proches les uns des autres, qui sont agencés de manière presque convergente vers un point central, et une seconde position dans laquelle les maillons sont alignés selon une ligne droite amenant les corps de préhension (26) à être agencés parallèlement l'un à l'autre et espacés.

16. Système selon la revendication 15, dans lequel, dans ladite première position, les surfaces de support (61) formées, faisant face auxdits corps tubulaires (35), sont agencées en contact les unes avec les autres pour favoriser la position convergente des éléments de préhension (26).

17. Système selon la revendication 15 ou 16, dans lequel les surfaces de support (60), formées dans des maillons consécutifs (36) dans leur partie supérieure, favorisent l'agencement parallèle et espacé sur la totalité desdits éléments de préhension (26).

18. Système selon l'une ou plusieurs des revendications précédentes 6 à 17, dans lequel lesdits éléments de préhension (26) fournissent des barres remplaçables (33) ayant une longueur variable.
